# EUROPEAN PATENT APPLICATION

(11) **EP 3 418 914 A1**
(43) Date of publication of application: **26.12.2018**
(21) Application number: 18174019.2
(22) Date of filing: 24.05.2018
(51) Int. Cl.: G06F 17/30

(54) **DATA MANAGEMENT APPARATUSES, METHODS, AND NON-TRANSITORY TANGIBLE MACHINE-READABLE MEDIA THEREOF**

(30) Priority: 21.06.2017 US 201715629021
(71) Applicant: BigObject Inc., 106 Taipei City (TW)
(72) Inventor: Huang, Yi-Cheng, 106 Taipei City (TW); Hseush, Wenwey, 106 Taipei City (TW)
(74) Representative: Michalski Hüttermann & Partner Patentanwälte mbB

(57) **Abstract**

Data management apparatus, method, and non-transitory tangible machine-readable medium thereof are provided. A memory space of an in-memory database is allocated for a sliding table, wherein the sliding table includes a plurality of records stored in a sequential order according to a time stamp of each record. A head pointer points to the beginning address of the least recent record among the records, while a tail pointer points to the following address of the most recent record among the records. When at least one new record comprising a time stamp is inserted into the sliding table, the tail pointer will be updated. When at least one expired record of the sliding table is identified according to a preset time bound and the time stamp of each expired record, the head pointer will be updated.

## Description

### BACKGROUND OF THE INVENTION

### Field of the Invention

The present invention relates to data management apparatuses, methods, and non-transitory tangible machine-readable media thereof. More specifically, the present invention relates to data management apparatuses, methods, and non-transitory tangible machine-readable media thereof that manage data in a sliding table.

### Descriptions of the Related Art

Memory and storage of any electronic computing apparatus (e.g. server, personal computer) are of limited-size and, hence, a database system installed in any electronic computing apparatus has limited storage space. Conventionally, the manager of a database system has to explicitly delete data stored therein from time to time to prevent the database system from being out of storage space. One of the key issues is to determine when and which parts of data to be deleted or moved to a secondary storage space. In the recent trend of big data, a special category of data, referred to as *streaming data,* has been identified and focused in the area of analytics. The data generated from Internet of Things (IoT), mobile app or large-scale Web services often falls in this category. Streaming data has the following characteristics.
1. The data stream is non-stop and generated from the real world in real time order.
2. It is immutable and collected as time-series data.
3. The more recent data is more valuable in business.

For the database that stores and manages streaming data, the old data is considered obsolete or expired once it has been collected and kept in database longer than certain period of time. It comes to a natural approach to deleting the expired data without affecting too much the business value of analytics results, according to the third characteristics of streaming data. Most database management systems are required to explicitly delete expired or old data, and compress the stored data in storage, when the storage space is about full. However, such way of removing expired/old data is very cumbersome, tedious and often leading to poor performance or even operation disruption. This issue is magnified and becomes a serious problem of data management while continuous, real-time analytics is required for streaming data.

The recent trend of Edge Computing opens up a new area of applications that require effective database management for streaming data collected at the edge. With the vigorous development of the IoT and mobile technologies, many electronic computing apparatuses (e.g. edge devices, equipment, routers, etc.) are designed to operate to collect, store and analyze data in the field, where the environment is harsh, resources such as memory are limited and devices are difficult to manage. An effective and efficient way for such electronic computing apparatuses to manage streaming data in database is an urgent need.

### SUMMARY OF THE INVENTION

To solve the aforesaid problem, the present invention provides a data management apparatus, method, and non-transitory tangible machine-readable medium thereof for managing data in an in-memory database with a fixed size of memory.

The data management apparatus provided by the present invention comprises an in-memory database and a processor, wherein the processor is electrically connected to the in-memory database. A memory space of the in-memory database is allocated for a sliding table, wherein the sliding table comprises a plurality of records stored in a sequential order according to a plurality of time stamps of the records. For the sliding table, the time stamp of a record reflects the time that the record is inserted into the sliding table. A least recent record and a most recent record are the record with the smallest time stamp and the record with the largest time stamp respectively. A head pointer points to a beginning address of the least recent record, while a tail pointer points to a following address of the most recent record (i.e., the first available memory address). The processor inserts at least one new record into the sliding table according to the tail pointer and moves the tail pointer according to a number of the at least one new record. Each new record comprise a time stamp as well. The processor further identifies at least one expired record in the sliding table according to a preset time bound and the time stamp of each expired record. The processor further moves the head pointer according to a number of the at least one expired record.

The data management method provided by the present invention is for use in an electronic apparatus. An in-memory database is allocated a memory space for a sliding table. The in-memory database may be in the electronic apparatus or external to the electronic apparatus. The sliding table comprises a plurality of records stored in a sequential order according to a plurality of time stamps of the records. For the sliding table, the time stamp of a record reflects the time that the record is inserted into the sliding table. A least recent record and a most recent record are the record with smallest time stamp and the record with the largest time stamp respectively. A head pointer points to a beginning address of the least recent record, while a tail pointer points to a following address of the most recent record. The data management method comprises the following steps of: (a) inserting at least one new record into the sliding table according to the tail pointer, wherein each new record comprises a time stamp, (b) moving the tail pointer according to a number of the at least one new record, (c) identifying at least one expired record in the sliding table according to a preset time bound and the time stamp of each expired record, and (d) moving the head pointer according to a number of the at least one expired record.

The non-transitory tangible machine-readable medium provided by the present invention is stored with a computer program. The computer program comprises a plurality of codes, wherein the codes are able to execute a data management method when the computer program is loaded into an electronic apparatus. An in-memory database is allocated a memory space for a sliding table. The in-memory database may be in the electronic apparatus or external to the electronic apparatus. The sliding table comprises a plurality of records stored in a sequential order according to a plurality of time stamps of the records. For the sliding table, the time stamp of a record reflects the time that the record is inserted into the sliding table. The least recent record and the most recent record are the record with smallest time stamp and the record with the largest time stamp respectively. A head pointer points to a beginning address of the least recent record, while a tail pointer points to a following address of the most recent record. The data management method comprising the steps of: (a) inserting at least one new record into the sliding table according to the tail pointer, wherein each new record comprises a time stamp, (b) moving the tail pointer according to a number of the at least one new record, (c) identifying at least one expired record in the sliding table according to a preset time bound and the time stamp of each expired record, and (d) moving the head pointer according to a number of the at least one expired record.

According to the above descriptions, the data management technology provided by the present invention allocates a memory space in an in-memory database for sliding tables and manages data therein. Briefly speaking, a plurality of records stored in a sliding table has a sequential order, wherein the sequential order is determined according to the time stamps of the records. A head pointer points to the beginning address of the least recent record, while a tail pointer points to the following address of the most recent record. With the tail pointer, the present invention can easily locate a storing space in the sliding table for a new record. With the head pointer, the present invention can easily identify the expired record(s) according to the time stamp(s) and a preset time bound. As a result, the data management technology of the present invention can utilize the limited storage space appropriately and can be applied to electronic computing apparatus of every kind of computational ability, especially the electronic computing apparatus that processes streaming data.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1A** illustrates the concept of the sliding table;
**FIG 1B** illustrates an example for accommodating a sliding table in an in-memory database;
**FIG 1C** illustrates a schematic view of an exemplary data management apparatus 1 of the present invention;
**FIG 2A** illustrates a schematic view of the initialization of the memory space **101** for a sliding table;
**FIG 2B** illustrates a schematic view of the update of the tail pointer **T1** after the insertion of the received records **12a, 12b, ..., 12c;**
**FIG 2C** illustrates a schematic view of the update of the head pointer **H1** after the identification of an expired record;
**FIG 3A** illustrates the concept that the memory space **101** for the sliding table is full;
**FIG 3B** illustrates the concept of allocating another memory space **102** for the sliding table;
**FIG 3C** illustrates a first specific example of moving a portion of the received records;
**FIG 3D** illustrates a second specific example of moving a portion of the received records;
**FIG 4A** illustrates a schematic view of joining two sliding tables;
**FIG 4B** illustrates the concept of updating a record in the sliding table;
**FIG 4C** illustrates a schematic view of joining three sliding tables;
**FIG 5** illustrates a system **5** of Internet of Things (IoTs) in the fourth embodiment of the present invention;
**FIG 6A** illustrates the flowchart of inserting new record and moving the first tail pointer in the fifth embodiment;
**FIG. 6B** illustrates the flowchart of identifying expired record(s) and moving the first head pointer in the fifth embodiment; and
**FIG. 6C** illustrates the flowchart for expanding the memory space for the first sliding table.

### DESCRIPTION OF THE PREFERRED EMBODIMENT

In the following descriptions, data management apparatuses, methods, and non-transitory tangible machine-readable media thereof of the present invention will be explained with reference to embodiments thereof. However, these embodiments are not intended to limit the present invention to any specific environment, applications, or particular implementations described in these embodiments. Therefore, description of these embodiments is only for the purpose of illustration rather than to limit the present invention. It should be appreciated that elements unrelated to the present invention are omitted from depiction in the following embodiments and the attached drawings. In addition, dimensional relationships among individual elements in the attached drawings are illustrated only for ease of understanding but not to limit the scope of the present invention.

The present invention relates to data management apparatuses, methods, and non-transitory tangible machine-readable media thereof that allocates memory space(s) for sliding table(s) and manages data therein. A sliding table is different from a table used in any conventional database system. A table, as defined in relational database, is a set of records, each of which consists of a fixed number of columns of attributes in a pre-defined order. Each attribute is a piece of data element with a data type such as integer. All the attributes in the same column are of the same data type. In some cases, a subset of attributes defines the primary key of a record, which must be unique and is used to identify the record.

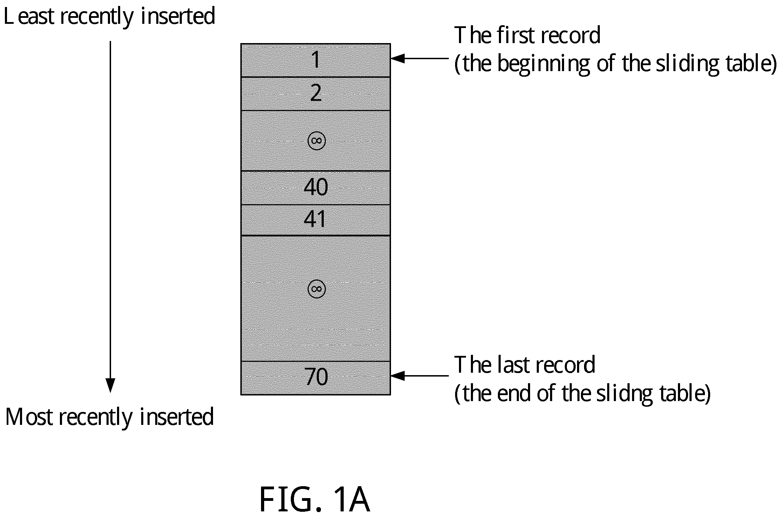

In the present invention, a sliding table is a table with constraint of recency. Please refer to **FIG. 1A** for the concept of the sliding table. The records (e.g. the 70 records shown in **FIG 1A**) in the sliding table are stored sequentially according to their time stamps (not shown). Please note that the time stamp of a record is an implicit attribute of the record indicating the time that the record is inserted into the sliding table. When a new record arrives, the new record will be inserted at the end of the sliding table. Furthermore, records in the sliding table become expired if they stay in the sliding table long enough (i.e. longer than a preset time bound).

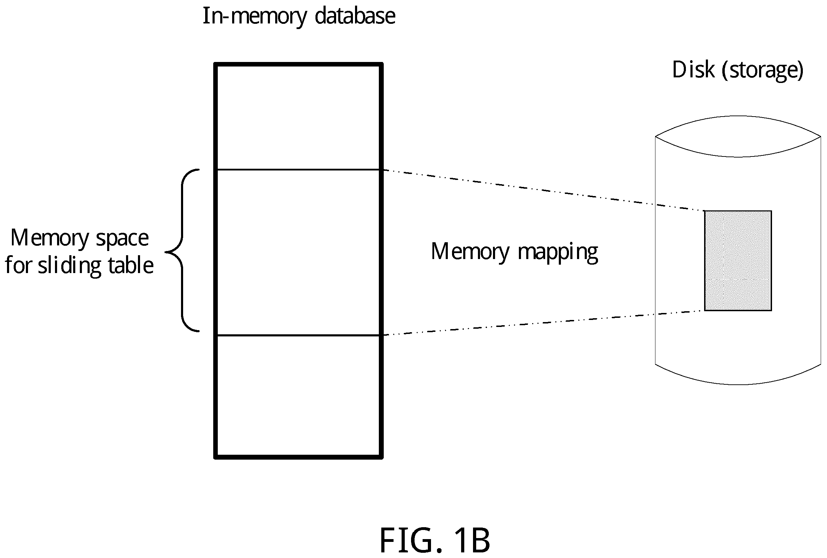

In the present invention, a sliding table is accommodated in an in-memory database such as the one shown in **FIG. 1B**. Particularly, one or more memory spaces of the in-memory database will be allocated for the sliding table(s). In some embodiments, the in-memory database may be realized in memory (e.g. a random access memory, a static random access memory, a dynamic random access memory, etc.) by loading and storing data from and to disk storage. In some embodiments, the in-memory database may be a virtual memory space, which is realized by memory mapping a file or a portion of a disk. By allocating at least one memory space in an in-memory database for a sliding table, the sliding table slides within the memory space from time to time. In addition, with the aforementioned constraint of recency (i.e., keeping only recent data records and removing expired data records), the memory space has room for new record(s) most of the time. The following embodiments will elaborate the details for managing sliding table(s) having the aforementioned characteristics.

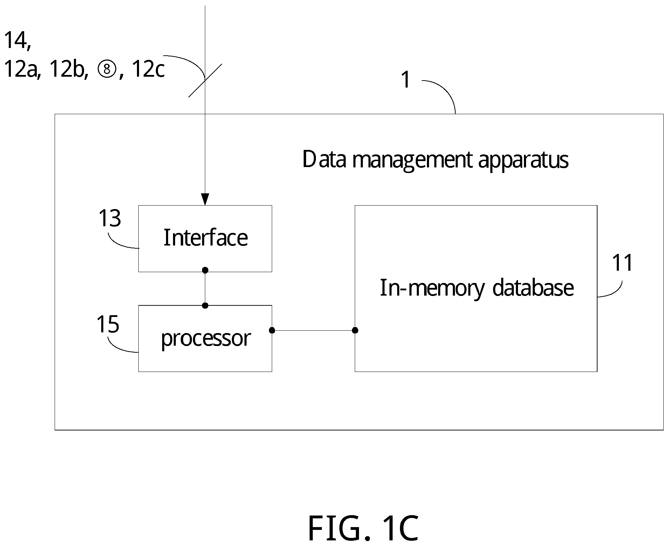

**FIG. 1C** illustrates a schematic view of an exemplary data management apparatus **1** of the present invention. The data management apparatus **1** comprises an in-memory database **11,** an interface **13,** and a processor **15,** wherein the processor **15** is electrically connected to the in-memory database **11** and the interface **13.** The in-memory database **11** may be realized in a main memory, such as a virtual memory space, a random access memory, a static random access memory, a dynamic random access memory, or any other memory with the same function and well-known to those of ordinary skill in the art or a circuit. The interface **13** may be any interface that can receive an instruction according to the control of a user (e.g., an instruction). In some embodiments, the interface **13** may not be required. The processor **15** may be any of various processors, central processing units (CPUs), microprocessors, or other computing devices well known to those of ordinary skill in the art.

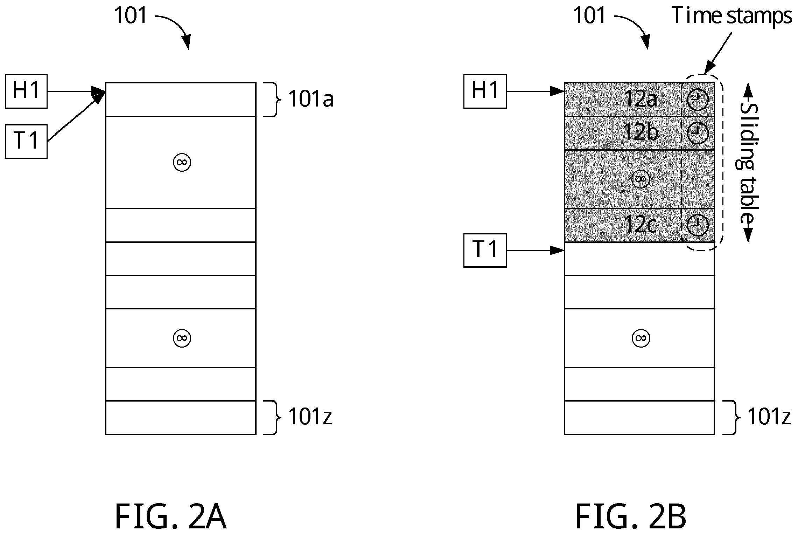

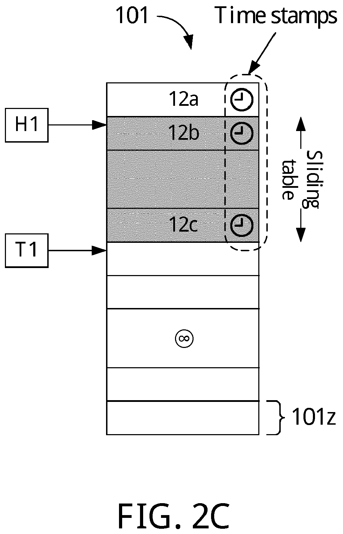

Please refer to **FIG. 1C****,** **FIG 2A****,** **FIG 2B****,** and **FIG 2C** for a first embodiment of the present invention. In this embodiment, a memory space **101** (which may be a contiguous memory space) of the in-memory database **11** is allocated for a sliding table. The memory space **101** of the in-memory database **11** may be allocated for the sliding table in advance or may be allocated by the processor **15** in response to an instruction received by the interface **13.** The memory space **101** comprises a plurality of record spaces **101a,** ..., **101z** as shown in **FIG 2A****,** wherein each of the record spaces **101a,** ..., **101z** is of the same record size. Initially, the sliding table is empty, which means that the memory space **101** contains no record. In **FIG 2A****,** a rectangle shown in white color represents a record space containing no record.

The processor **15** may define a circular order among the record spaces **101a,** ..., **101z.** By using the term "circular order," it means that the record spaces **101a,** ..., **101z** have a linear order and the first one according to the linear order is considered as the next record space of the last one according to the linear order. For example, the record space **101a** is the first one, ..., the record space **101z** is the last one, and the record space **101a** is the next one of the record space **101z**. In some embodiments, the processor **15** defines the circular order among the record spaces **101a,** ..., **101z** by defining another circular order for a plurality of memory addresses of the memory space **101.**

The processor **15** assigns a tail pointer **T1** and a head pointer **H1** for the sliding table. The head pointer **H1** points to the beginning address of the least recent record of the sliding table, while a tail pointer **T1** points to the following address of the most recent record of the sliding table (i.e. the tail pointer **T1** points to the next available record space). Initially, there is no record in the sliding table, so the processor **15** assigns both the head pointer **H1** and the tail pointer **T1** to point to a beginning address of the memory space **101** as shown in **FIG. 2A****.** It should be noted that the sliding table is empty when the head pointer **H1** and the tail pointer **T1** point to a same memory address.

After the environment for the sliding table has been set up (i.e. the memory space **101** for the sliding table has been allocated and the head and tail pointers **HI, T1** have pointed to the beginning address of the memory space **101**), the processor **15** is able to insert records into the memory space **101** and identify which record(s) belong to the sliding table by the head pointer **H1** and the tail pointer **T1**. The details of these operations are elaborated below.

In this embodiment, the interface **13** receives a plurality of records **12a, 12b, ..., 12c.** Please note that the records **12a, 12b, ..., 12c** may be received by other interface in other embodiments. The processor **15** inserts the records **12a, 12b, ..., 12c** into a portion of the record spaces **101a,** ..., **101z** starting from the record space pointed to by the tail pointer **T1** and following the circular order. Each of the records **12a, 12b, ..., 12c** is of the same size and has a time stamp. In this embodiment, the time stamp of a record is the time that the record is inserted into the sliding table. As shown in **FIG. 2B****,** the records **12a, 12b..., 12c** are stored sequentially (i.e. in a sequential order according to the time stamp of each record). Next, the processor **15** moves the tail pointer **T1** according to the number of the records **12a, 12b, ..., 12c** and the circular order so that the tail pointer **T1** points to the following address of the most recent record (i.e. the record **12c**). In **FIG 2B****,** a rectangle shown in gray color represents a record space containing a record of the sliding table.

In this embodiment, the processor **15** further identifies at least one expired record in the sliding table according to a preset time bound and the time stamp(s) of the at least one expired record, and moves the head pointer **H1** according to a number of the at least one expired record. Specifically, since the records **12a, 12b..., 12c** of the sliding table are stored in the memory space **101** sequentially (i.e. in a sequential order of the time stamps of the records **12a, 12b..., 12c),** the processor **15** may identify whether a record is expired from the record pointed to by the head pointer **H1.** In **FIG. 2C****,** it is assumed that the processor **15** identifies the record **12a** is an expired record according to the preset time bound and the time stamp of the record **12a.** Since the record **12a** is expired, it is no longer a member of the sliding table. Hence, the processor **15** moves the head pointer **H1** according to the number of the expired record(s) so that the head pointer **H1** points to the beginning address of the least recent record of the sliding table. In this case, the processor **15** moves the head pointer **H1** to point to the beginning address of the record 12b.

In some embodiments, the aforementioned identification of the at least one expired record and move of the head pointer **H1** may be tied to a select operator and/or a query operator of a database system. For those embodiments, when the interface **13** receives an instruction **14** including a select operator or a query operator, the processor **15** will identify at least one expired record (if any) in the sliding table and move the head pointer **H1** before performing the select operator or the query operator. In some other embodiments, the aforementioned identification of the at least one expired record and move of the head pointer **H1** may be performed by the processor **15** on a regular basis. Please note that the preset time bound may be adjusted by a user according to the speed of the incoming records so that the memory space **101** always has available record space for the incoming record(s). Please also note that different utilizations of sliding tables require different preset time bound.

According to the above descriptions, the data management apparatus **1** manages a sliding table by allocating a memory space **101** of the sliding table, defines a circular order for the record spaces **101a,** ..., **101z** comprised in the memory space **101,** assigns the tail pointer **T1** to point to the following address of the most recent record of the sliding table, and assigns the head pointer **H1** to the beginning address of the least recent record of the sliding table. When any record(s) need to be inserted, the data management apparatus **1** stores the record(s) in the sliding table from the address pointed to by the tail pointer **T1** and then movies the tail pointer **T1.** Upon some occasions (e.g. receiving an instruction comprising a select operator or a query operator), the data management apparatus **1** identifies expired record(s) starting from the record pointed to by the head pointer **H1** and then moves the head pointer **H1.** With the head pointer **H1** and the tail pointer **T1,** the sliding table "slides" in the memory space **101.** By identifying expired records, moving the head pointer **HI,** and even adjusting the preset time bound, the memory space **101** will have room for the incoming record(s). Therefore, the technology of the data management apparatus **1** in the first embodiment can be applied to electronic computing apparatus of every kind of computational ability.

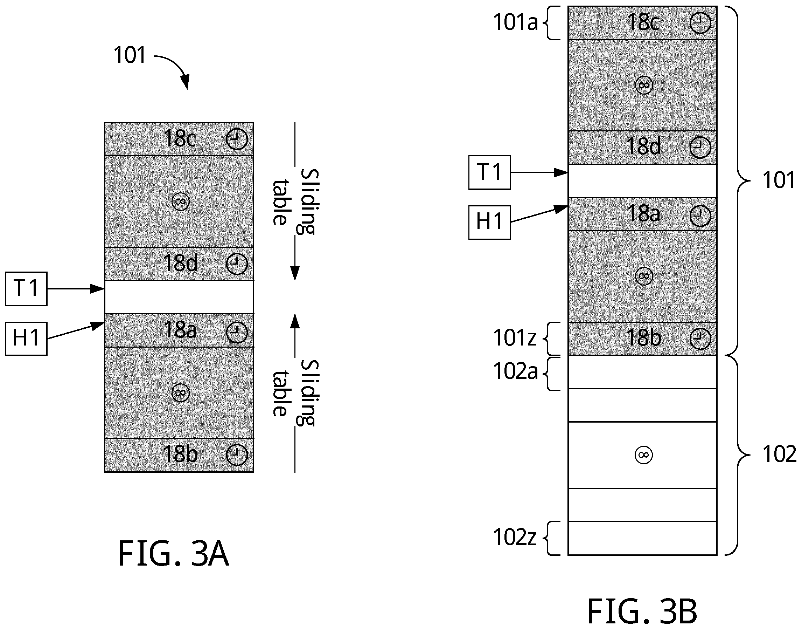

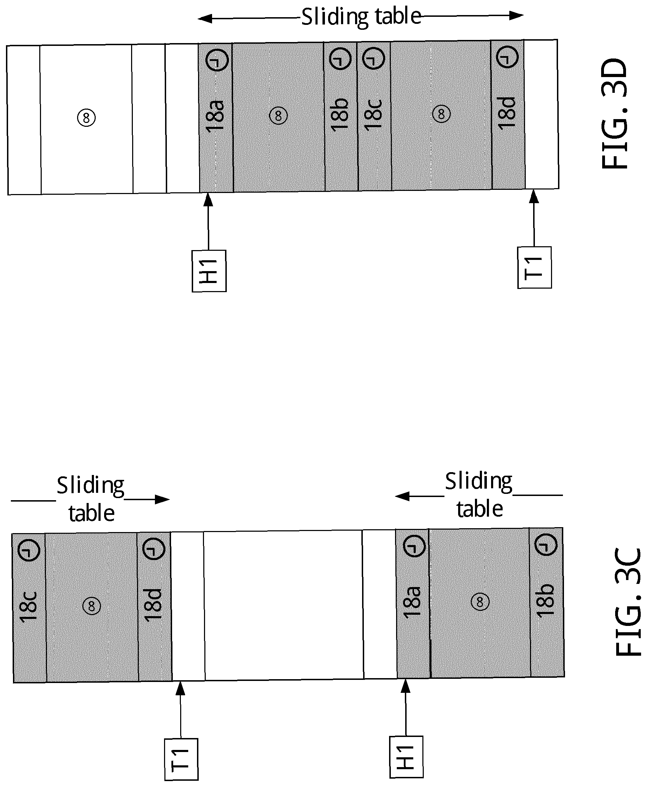

Please refer to **FIG.** 1C, **FIG. 3A****,** **FIG. 3B****,** **FIG 3C,** and **FIG 3D** for a second embodiment of the present invention. In the second embodiment, the processor **15** may expand the memory space **101** for the sliding table by allocating another memory space **102** of the in-memory database **11** for the sliding table. It usually happens when the memory space **101** for the sliding table is full.

Please refer to **FIG 3A****,** which illustrates the concept that the memory space **101** for the sliding table is full. In this embodiment, when only one record space in the memory space **101** is not occupied by the sliding table, the memory space **101** for the sliding table is determined full. As shown in **FIG 3A****,** the record spaces of the memory space **101** have stored the records **18a, ..., 18b, 18c, ..., 18d** and only one record space is not occupied by the sliding table and, therefore, the memory space **101** for the sliding table is considered full. Specifically, the processor **15** may determine that the memory space **101** for the sliding table is full by determining that the next record space of the record space pointed to by the tail pointer **T1** is the record space pointed by the head pointer **H1.**

As shown in **FIG 3B****,** the processor **15** may expand the memory space **101** for the sliding table by allocating another memory space **102** of the in-memory database **11** for the sliding table. It is noted that the size of the memory space **102** may be the same as or may be different to the size of the memory space **101.** The memory space **102** comprises a plurality of record spaces **102a, ..., 102z,** wherein each of the record spaces **102a,** ..., **102z** is of the record size. Then, the processor **15** updates the circular order for the record spaces **101a, ..., 101z** and the record spaces **102a,** ..., **102z** so that the record spaces **101a,** ..., **101z, 102a,** ..., **102z** are defined by the circular order. Next, the processor **15** moves a portion of records and then moves the head pointer **H1** and/or the tail pointer **T1.**

Please refer to **FIG 3A, FIG 3B****,** and **FIG 3C** for a first specific example. In this example, the circular order is updated as having the characteristics of: (a) the record spaces **101a,** ..., **101z** have a linear order, (b) the record spaces **102a, ..., 102z** have a linear order, (c) the record space **102a** is the next one of the record space **101z,** and (d) the record space **101a** is the next one of the record space **102z.** In the example shown in **FIG. 3C****,** the processor **15** moves a portion of the records according to the head pointer **H1** (i.e. moves the older ones/the least recently inserted among all the records) and then moves the head pointer **H1** as shown in **FIG. 3C****.** Please refer to **FIG. 3D** for a second specific example, wherein the processor **15** moves a portion of the records according to the tail pointer T1 (i.e. the newer ones/the most recently inserted among all the received records) and then moves the tail pointer **T1** as shown in **FIG. 3D****.** In **FIGs. 3A, 3B****,** **3C,** and **3D****,** a rectangle in white color represents a record space containing no record and a rectangle in grey color represents a record space occupied by the sliding table.

According to the above descriptions, the data management apparatus **1** will expand the memory space **101** for the sliding table by allocating another memory space **102** when it is necessary (e.g. when the memory space **101** for the sliding table is full). Therefore, in addition to the advantages described in the first embodiment, this embodiment can deal with the burst of the incoming records.

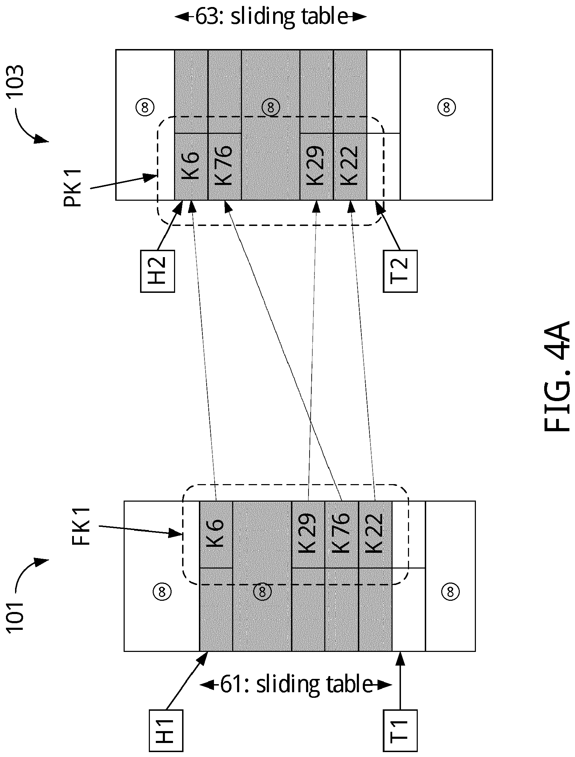

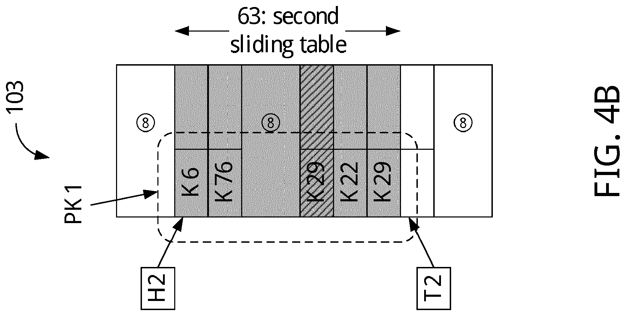

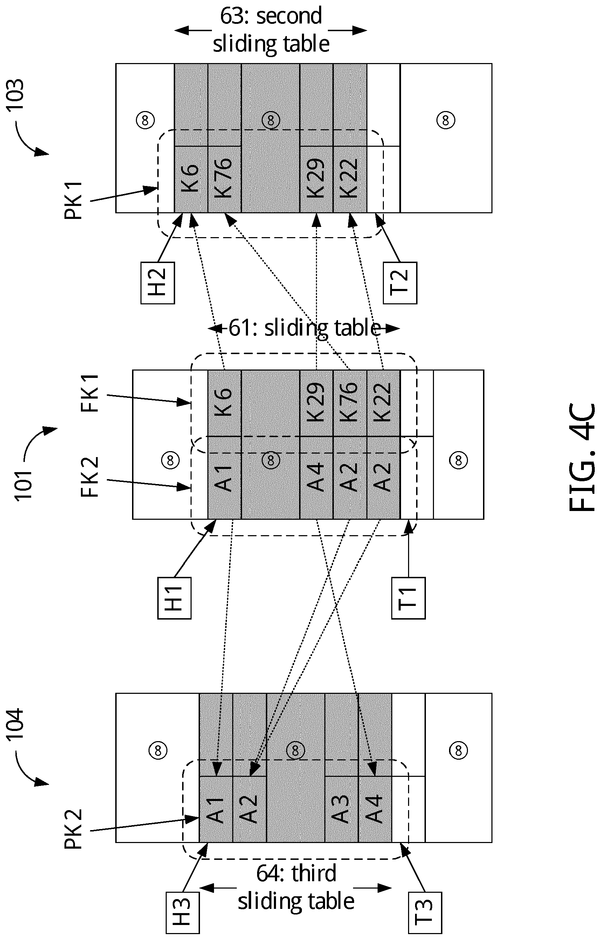

Please refer to **FIG. 1C****,** **FIG. 4A****,** **FIG 4B****,** and **FIG 4C** for a third embodiment of the present invention.

In the third embodiment, the data management apparatus **1** allocates a plurality of memory spaces of the in-memory database **11** for a plurality of sliding tables individually. One sliding table serves as the fact table from a data stream, while the others serve as the dimension tables from the same or different data stream(s). The fact table may contain one or more foreign keys that refer to the records in the dimension tables. Each of the dimension tables contains a primary key used to identify a unique record.

A concrete example is given herein. The memory spaces **101, 103, 104** are respectively allocated for the sliding tables **61, 63, 64** as shown in **FIG 4A** and **FIG 4C****.** In **FIG 4A** and **FIG 4C****,** a rectangle in white color represents a record space containing no record and a rectangle in grey color represents a record space containing a record of the sliding table **61/63/64.** The head pointer **H1** points to the beginning address of the least recent record of the sliding table **61,** while the tail pointer **T1** points to the following address of the most recent record of the sliding table **61.** The head pointer **H2** points to the beginning address of the least recent record of the sliding table **63,** while the tail pointer **T2** points to the following address of the most recent record of the sliding table **63.** The head pointer **H3** points to the beginning address of the least recent record of the sliding table **64,** while the tail pointer **T3** points to the following address of the most recent record of the sliding table **64.** Similar to the aforementioned embodiments, each record in the sliding tables **61, 63, 64** has a time stamp (not shown).

The data management apparatus **1** can manage the sliding tables **61, 63, 64** in the ways described in the aforementioned embodiments except using a slightly different way for inserting new records into the sliding tables with primary keys (i.e., the dimension tables **63** and **64,** which have the primary keys **PK1, PK2** respectively). The processor **15** needs to ensure that the most recent record with the same key is always used at reference by key (i.e., at select or join). Any previous records with the same key becomes obsolete when the new one is inserted.

In an example, the sliding table **61** is a fact table comprising sales transaction record(s). The sliding table **61** defines a plurality of first attributes and one of them is a foreign key **FK1** (e.g. customer's social security number). The sliding table **63** is a dimension table comprising customer information. The sliding table **63** defines a plurality of second attributes and one of them is the primary key **PK1** (e.g. customer's social security number). The foreign key **FK1** of the sliding table **61** and the primary key **PK1** of the sliding table **63** correspond to the same type of information (e.g. customer's social security number), it is considered as the sliding table **61** and the sliding table **63** have a common key. The processor **15** may apply a join operation to the sliding table **61** and the sliding table **63** according to the common key.

When a new record is inserted into a sliding table with a primary key (i.e., dimension sliding table), the processor **15** first locates and, if exists, marks the old record with the same primary key invalid before adds the new record into the end of the sliding table and moves the tail pointer. At the point when identifying expired records, the processor **15** needs to search through both valid and invalid records starting from the head pointer. The expired records are then removed by moving the head pointer. In **FIG. 4B****,** a rectangle shown in slash lines represents a record that is marked invalid since it contains the key K29, the same as the primary key of the newly inserted record.

Please refer to **FIG. 4C** for another concrete example. The sliding table **61** defines a plurality of first attributes, wherein two of them are the foreign key **FK1** (e.g. customer's social security number) and a foreign key **FK2** (e.g. commodity name). The sliding table **63** defines a plurality of second attributes, wherein one of them is a primary key **PK1** (e.g. customer's social security number). The sliding table **64** may be a dimension table comprising the information of the remaining stock to each commodity. The sliding table **64** defines a plurality of third attributes and one of them is a primary key **PK2** (e.g. commodity name). If the foreign key **FK2** of the sliding table **61** and the primary key **PK2** of the sliding table **64** correspond to the same type of information (e.g. commodity name), it is considered as the sliding table **61** and the sliding table **64** have a common key. In this example, the sliding table **61** has a first common key with the sliding table **63** and has a second common key with the sliding table **64.** Hence, the processor **15** may have the sliding table **61** joined with the sliding table 63 and the sliding table **64** according to the different common keys.

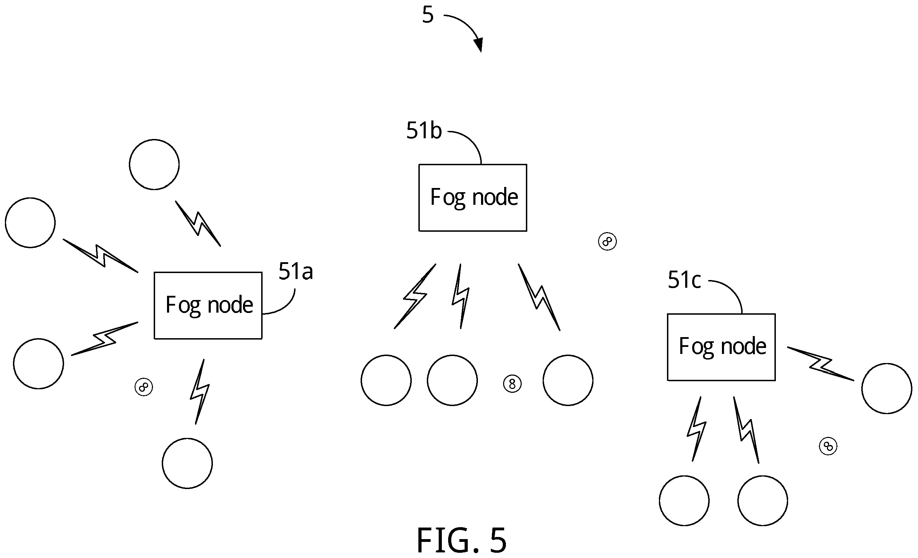

Please refer to **FIG. 5** for a fourth embodiment of the present invention, which is a system **5** of Internet of Things (IoTs). The system 5 comprises a plurality of fog nodes **51a, 51b,** ..., **51c.** Each of the fog nodes **51a, 51b,** ... **51c** is an electronic computing apparatus with limited memory space and computation power, such as a gateway device. Each of the fog nodes **51a, 51b,** ..., **51c** is electrically connected to a plurality of sensors and/or IoT devices and receives data therefrom. Each of the fog nodes **51a, 51b,** ..., **51c** is able to perform the operations of the data management apparatus **1** as described in the previous embodiments. Each of the fog nodes **51a, 51b,** ..., **51c** the data/records stored in its sliding table(s) instead of sending it back to the cloud or a remote data center immediately. Therefore, the system **5** of this embodiment realizes the technique of edge computing.

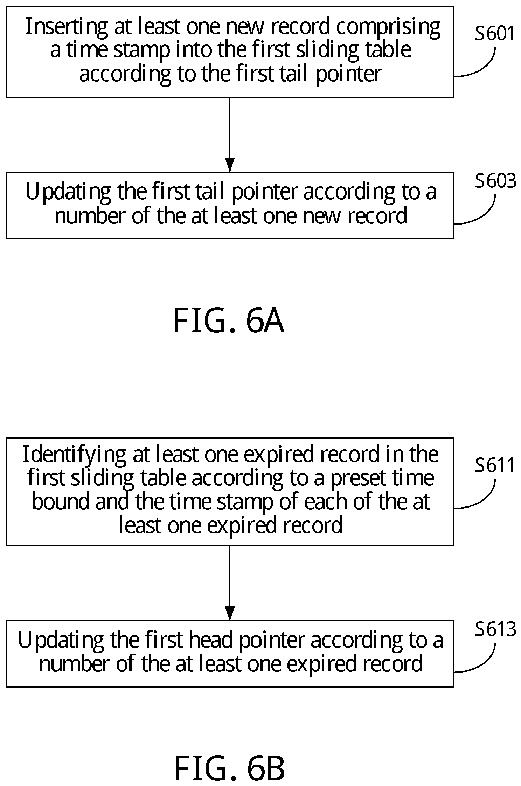

A fifth embodiment of the present invention is a data management method and a flowchart of which is illustrated in **FIG. 6A** and **FIG 6B****.** The data management method is for use in an electronic apparatus, such as the data management apparatus **1.** In this embodiment, a first memory space of an in-memory database is allocated for a first sliding table. The in-memory database may be in the electronic apparatus or external to the electronic apparatus. The first sliding table comprises a plurality of records stored in the first memory space in a sequential order according to the time stamp of each record, the time that the record is inserted. A first head pointer points to a beginning address of the least recent record among the records, while a first tail pointer points to the following address of the most recent record among the records.

Please refer to **FIG 6A****,** which illustrates the flowchart of inserting new record and moving the first tail pointer. First, step **S601** is executed by the electronic apparatus for inserting at least one new record comprising a time stamp into the first sliding table according to the first tail pointer. Next, step **S603** is executed by the electronic apparatus for moving the first tail pointer according to a number of the at least one new record so that the first tail pointer still points to the following address of the most recent record among the records after the insertion. In some embodiments, a plurality of memory addresses of the first memory space are defined with a first circular order and, therefore, the step **S603** moves the first tail pointer by following the first circular order.

Please refer to **FIG 6B****,** which illustrates the flowchart of identifying expired record(s) and moving the first head pointer. In step **S611,** the electronic apparatus identifies at least one expired record in the first sliding table according to a preset time bound and the time stamp of each expired record. Next, step **S613** is executed by the electronic apparatus for moving the first head pointer according to a number of the at least one expired record so that the first head pointer still points to the beginning address of the least recent record among the records remained in the first sliding table.

In some embodiments, the flowchart illustrated in **FIG. 6B** may be tied to a select operator and/or a query operator of a database system. For those embodiments, the data management method will execute a step of receiving an instruction comprising one of a select operator and a query operator. After the receiving of the instruction, the step **S611** and the step **S613** are executed.

It is possible that the first sliding table is empty at some of the time. When the first head pointer and the first tail pointer point to a same memory address, the first sliding table is empty.

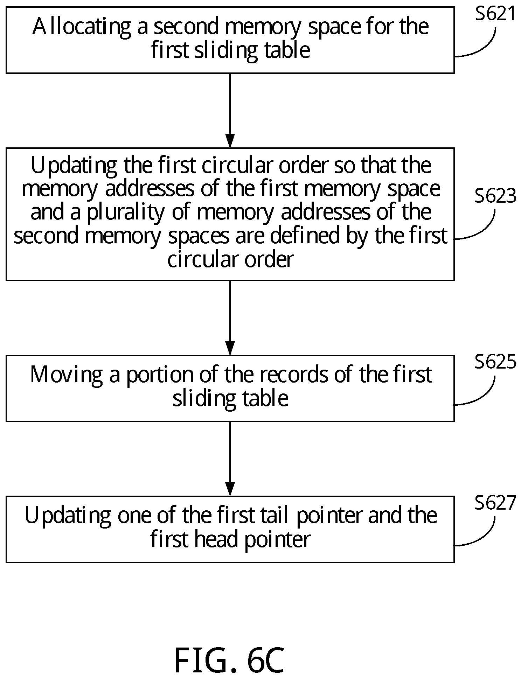

It is also possible that the first memory space for the sliding table is full at some of the time. In this embodiment, the data management method will execute a step (not shown) for adjusting the present time bound when the sliding table is full. In some other embodiments, the data management method will expand the memory space for the first sliding table by the procedure shown in **FIG. 6C****.** In step **S621,** the electronic apparatus allocates a second memory space for the first sliding table. Next, step **S623** is executed by the electronic apparatus for updating the first circular order so that the memory addresses of the first memory space and a plurality of memory addresses of the second memory spaces are defined by the first circular order. Following that, step **S625** is executed by the electronic apparatus for moving a portion of the records of the first sliding table. Then, step **S627** is executed by the electronic apparatus for moving one of the first tail pointer and the first head pointer.

In some embodiments, the step **S625** moves a portion of the records according to the first head pointer (i.e. moves the older ones/the least recently inserted among all the records) and then the step **S627** moves the first head pointer. In some other embodiments, the step **S625** moves a portion of the records according to the first tail pointer (i.e. the newer ones/the most recently inserted among all the received records) and then the step **S627** moves the first tail pointer.

In some embodiments, the data management method may manage several sliding tables. For example, the data management method may further allocate a second memory space of the in-memory database for a second sliding table and have a plurality of memory addresses of the second memory space defined with a second circular order. For those embodiments, if the first sliding table and the second sliding table have a common key, the data management method may execute another step for applying a join operation to the first sliding table and the second sliding table according to the common key.

In addition to the aforesaid steps, the fifth embodiment is able to execute all the operations and steps of the data management apparatus **1** set forth in the previous embodiments, have the same functions, and deliver the same technical effects as the previous embodiments. How the fifth embodiment executes these operations and steps, have the same functions, and deliver the same technical effects as the previous embodiments will be readily appreciated by those of ordinary skill in the art based on the explanation of the previous embodiment and, thus, will not be further described herein.

The data management method described in the fifth embodiment may be implemented by a computer program having a plurality of codes. The computer program is stored in a non-transitory computer readable storage medium. When the codes are loaded into an electronic apparatus (e.g. the data management apparatus **1**), the computer program executes the data management method as described in the fifth embodiment. The non-transitory computer readable storage medium may be a read only memory (ROM), a flash memory, a floppy disk, a hard disk, a compact disk (CD), a mobile disk, a magnetic tape, a database accessible to networks, or any other storage media with the same function and well known to those skilled in the art.

It shall be appreciated that, in the specification of the present invention, the terms "first" and "second" used in the first memory space and the second memory space are only intended to distinguish these memory spaces from each other. In addition, the terms "first" and "second" used in the first circular order and the second circular order are only intended to distinguish that these circular orders are different.

According to the above descriptions, the data management technology provided by the present invention allocates a memory space in an in-memory database for a sliding table and manages data therein. Briefly speaking, a plurality of records stored in the sliding table has a sequential order, wherein the sequential order is determined according to the time stamps of the records. A head pointer points to the beginning address of the least recent record among the records, while a tail pointer points to the following address of the most recent record among the records. With the tail pointer, the present invention can easily locate a storing space in the sliding table for a new record. With the head pointer, the present invention can easily identify the expired record(s) according to the time stamp(s) and a preset time bound. When the memory space for the sliding table is full, the data management technology provided by the present invention allocates another memory space for the sliding table. Therefore, there is always room for the coming records. The data management technology provided by the present invention is able to manage several sliding tables. In that case, database operations (e.g. join) can be applied to these sliding tables. As a result, the data management technology of the present invention can utilize the limited storage space appropriately and can be applied to electronic computing apparatus of every kind of computational ability, especially the electronic computing apparatus that processes streaming data.

## Claims

1. A data management apparatus (1), being **characterized by** comprising:
an in-memory database (11), wherein a first memory space (101) of the in-memory database (11) is allocated for a first sliding table, the first sliding table comprises a plurality of records (12a, 12b, ..., 12c) stored in a sequential order according to a time stamp of each record, a first head pointer (HI) points to a beginning address of a least recent record (12a) among the records (12a, 12b, ..., 12c) and a first tail pointer (T1) points to a following address of a most recent record (12c) among the records (12a, 12b, ..., 12c); and
a processor (15), being electrically connected to the in-memory database (11) and configured to insert at least one new record comprising a time stamp into the first sliding table according to the first tail pointer (T1), move the first tail pointer (T1) according to a number of the at least one new record,
wherein the processor (15) is further configured to identify at least one expired record (12a) in the first sliding table according to a preset time bound and the time stamp of each expired record and move the first head pointer (HI) according to a number of the at least one expired record (12a).

2. The data management apparatus (1) of Claim 1, wherein a plurality of memory addresses of the first memory space (101) are defined with a first circular order and the first tail pointer (T1) is moved by the processor (15) by following the first circular order.

3. The data management apparatus (1) of Claim 2, wherein the first sliding table is empty when the first head pointer (HI) and the first tail pointer (T1) point to a same memory address.

4. The data management apparatus (1) of Claim 2, wherein the processor (15) is further configured to perform the following operations:
allocating a second memory space (102) for the first sliding table;
updating the first circular order so that the memory addresses of the first memory space (101) and a plurality of memory addresses of the second memory space (102) are defined by the first circular order;
moving a portion of the records of the first sliding table according to the first head pointer (HI); and
moving the first head pointer (HI).

5. The data management apparatus (1) of Claim 2, wherein the processor (15) is further configured to perform the following operations:
allocating a second memory space (102) for the first sliding table;
updating the first circular order so that the memory addresses of the first memory space (101) and a plurality of memory addresses of the second memory space (102) are defined by the first circular order;
moving a portion of the records of the first sliding table according to the first tail pointer (T1); and
moving the first tail pointer (T1).

6. The data management apparatus (1) of Claim 2, wherein a second memory space (102) of the in-memory database (11) is allocated for a second sliding table (63), a plurality of memory addresses of the second memory space (102) are defined with a second circular order, the first sliding table (61) and the second sliding table (63) have a common key (FK1, PK1), and the processor (15) further applies a join operation to the first sliding table (61) and the second sliding table (63) according to the common key (FK1, PK1).

7. The data management apparatus (1) of Claim 2, further comprising:
an interface (13), being electrically connected to the processor (15) and configured to receive an instruction (14), wherein the instruction (14) comprises one of a select operator and a query operator,
wherein the at least one expired record in the first sliding table is identified by the processor (15) after the interface (13) receives the instruction (14) and the first head pointer (H1) is moved by the processor (15) after the interface (13) receives the instruction (14).

8. A data management method for use in an electronic apparatus, being **characterized in that** a first memory space (101) of an in-memory database (11) is allocated for a first sliding table, the first sliding table comprises a plurality of records (12a, 12b, ..., 12c) stored in a sequential order according to a time stamp of each record, a first head pointer (HI) points to a beginning address of a least recent record (12a) among the records (12a, 12b, ..., 12c), a first tail pointer (T1) points to a following address of a most recent record (12c) among the records (12a, 12b, ..., 12c), and the data management method comprises the following steps of:
(a) inserting at least one new record comprising a time stamp into the first sliding table according to the first tail pointer (T1);
(b) moving the first tail pointer (T1) according to a number of the at least one new record;
(c) identifying at least one expired record (12a) in the first sliding table according to a preset time bound and the time stamp of each expired record (12a); and
(d) moving the first head pointer (HI) according to a number of the at least one expired record (12a).

9. The data management method of Claim 8, wherein a plurality of memory addresses of the first memory space (101) are defined with a first circular order and the step (b) moves the first tail pointer (T1) by following the first circular order.

10. The data management method of Claim 9, wherein the first sliding table is empty when the first head pointer (HI) and the first tail pointer (T1) point to a same memory address.

11. The data management method of Claim 9, further comprising the following steps of:
allocating a second memory space (102) for the first sliding table;
updating the first circular order so that the memory addresses of the first memory space (101) and a plurality of memory addresses of the second memory space (102) are defined by the first circular order;
moving a portion of the records of the first sliding table according to the first head pointer (HI); and
moving the first head pointer (HI).

12. The data management method of Claim 9, further comprising the following steps of:
allocating a second memory space (102) for the first sliding table;
updating the first circular order so that the memory addresses of the first memory space (101) and a plurality of memory addresses of the second memory space (102) are defined by the first circular order;
moving a portion of the records of the first sliding table according to the first tail pointer (T1); and
moving the first tail pointer (T1).

13. The data management method of Claim 9, wherein a second memory space (102) of the in-memory database (11) is allocated for a second sliding table (63), a plurality of memory addresses of the second memory space (102) are defined with a second circular order, the first sliding table (61) and the second sliding table (63) have a common key (FK1, PK1), and the data management method further comprises the following step of:
applying a join operation to the first sliding table (61) and the second sliding table (63) according to the common key (FK1, PK1).

14. The data management method of Claim 9, further comprising the following step before the step (c) and the step (d):
receiving an instruction (14), wherein the instruction (14) comprises one of a select operator and a query operator.

15. A non-transitory tangible machine-readable medium, being stored with a computer program, the computer program comprising a plurality of codes, the codes being able to execute a data management method when the computer program is loaded into an electronic apparatus, being **characterized in that** a first memory space (101) of an in-memory database (11) is allocated for a first sliding table, the first sliding table comprises a plurality of records (12a, 12b, ..., 12c) stored in a sequential order according to a time stamp of each record, a first head pointer (HI) points to a beginning address of a least recent record (12a) among the records (12a, 12b, ..., 12c), a first tail pointer (T1) points to a following address of a most recent record (12c) among the records (12a, 12b, ..., 12c), and the data management method comprises the steps of:
(a) inserting at least one new record comprising a time stamp into the first sliding table according to the first tail pointer (T1);
(b) moving the first tail pointer (T1) according to a number of the at least one new record;
(c) identifying at least one expired record (12a) in the first sliding table according to a preset time bound and the time stamp of each expired record (12a); and
(d) moving the first head pointer (HI) according to a number of the at least one expired record (12a).
